# EUROPEAN PATENT SPECIFICATION

(11) **EP 4 130 685 B1**
(45) Date of publication and mention of the grant of the patent: **22.10.2025**
(21) Application number: 21189682.4
(22) Date of filing: 04.08.2021
(51) Int. Cl.: G01D 11/30, H02G 15/013, H02G 3/22

(54) **SEPARATION ASSEMBLY, METHOD FOR INSTALLING THE SAME, SEPARATION ASSEMBLY FOR TRANSMITTER ASSEMBLIES BETWEEN DIFFERENT EQUIPMENT PROTECTION LEVELS IN A HAZARDOUS ENVIRONMENT**
TRENNUNGSANORDNUNG, EINBAUVERFAHREN DAFÜR, UND TRENNUNGSANORDNUNG VON SENDER ZWISCHEN VERSCHIEDENEN AUSRÜSTUNGSSCHUTZNIVEAUS IN EINER GEFÄHRLICHEN UMGEBUNG
ÉLÉMENT DE SÉPARATION, PROCÉDÉ D'INSTALLATION CORRESPONDANT ET ÉLÉMENT DE SÉPARATION POUR ENSEMBLE D'ÉMETTEURS ENTRE DIFFÉRENTS NIVEAUX DE PROTECTION D'ÉQUIPEMENT DANS UN ENVIRONNEMENT DANGEREUX

(43) Date of publication of application: 08.02.2023
(73) Proprietor: ABB Schweiz AG, 5400 Baden (CH)
(72) Inventor: BALUJA, Wilfredo Fernando, Warminster, PA, 18974 (US); JAROSLAWSKI, Andrzej, Raleigh, NC, 27606 (US); AERTS, Wouter Frans, 1050 Brussels (BE)
(74) Representative: Zimmermann & Partner Patentanwälte mbB

(56) References cited:
- US-A- 4 301 325
- US-A- 5 399 807
- US-A1- 2005 025 608
- US-A1- 2010 218 838
- US-A1- 2015 211 902

## Description

### BACKGROUND

The field of the disclosure relates generally to assemblies and methods of transmitters, and more particularly, to assemblies and methods of transmitters between different equipment protection levels in a hazardous environment.

Transmitters are used to measure physical parameters such as liquid levels and pressure. When used in a hazardous environment, the transmitters must meet requirements for those environments. Conventional explosion proof or flame proof transmitters are limited to rigid probes of certain form factors, imposing constraints on transmitters that can be used in hazardous environments, especially between different equipment protection levels in a hazardous environment. Improvements are desired. Patent application US 5 399 807 A describes an explosion-proof electrical apparatus including two enclosures containing electrical devices. The enclosures are physically interconnected by a one-piece or two-piece hollow sleeve member which is screwed into threaded holes of the enclosures. A fitting assembly mounted in the sleeve member comprises a hollow feedthrough bushing screwed into the sleeve member, a hollow feedthrough seal member screwed into the feedthrough bushing, and a plurality of conductors extending through the feedthrough seal member and electrically connected to the electrical devices. The conductors are embedded in sealing compound which occupies the feedthrough seal member. During assembly of the fitting assembly, the feedthrough seal member is positioned within the sleeve, and the feedthrough bushing is screwed along the feedthrough seal member and is simultaneously screwed into the sleeve.

### BRIEF DESCRIPTION

In one aspect, a transmitter assembly for a hazardous environment is provided. The transmitter assembly includes a transmitter and a separation assembly. The transmitter includes a transmitting unit configured to be positioned in a first area of the hazardous environment and a probe coupled with the transmitting unit and configured to be positioned in a second area of the hazardous environment, wherein the second area is more hazardous and has a higher equipment protection level than the first area. The separation assembly is positioned between the transmitting unit and the probe, the separation assembly including a hermetic seal and a nut. The hermetic seal is configured to be electrically connected to the transmitting unit and the probe. The nut defines a tunnel sized to receive the hermetic seal therein, wherein the nut has an exterior surface and exterior threads formed on the exterior surface. The exterior threads of the nut are complementary to threads on a partition wall positioned between the transmitting unit and the probe. The nut has an interior surface opposite the exterior surface and interior threads formed on the interior surface, the exterior threads and the interior threads sloping in opposite directions, wherein the hermetic seal and the nut include a plurality of recesses, respectively.

In another aspect, a separation assembly of a transmitter assembly for a hazardous environment is provided. The separation assembly includes a hermetic seal and a nut. The hermetic seal is configured to be electrically connected to a transmitting unit and a probe of the transmitter assembly. The nut defines a tunnel sized to receive the hermetic seal therein, wherein the nut has an exterior surface and exterior threads formed on the exterior surface. The exterior threads of the nut are complementary to threads on a partition wall positioned between the transmitting unit and the probe. The nut has an interior surface opposite the exterior surface and interior threads formed on the interior surface, the exterior threads and the interior threads sloping in opposite directions, wherein the hermetic seal and the nut include a plurality of recesses, respectively.

In one more aspect, a method of installing a separation assembly of a transmitter assembly between different equipment protection levels in a hazardous environment is provided. The method includes providing a hermetic seal and a nut, wherein the hermetic seal is configured to be electrically connected to a transmitting unit and a probe of the transmitter assembly, and the nut defines a tunnel sized to receive the hermetic seal therein, wherein the nut has an exterior surface and exterior threads formed on the exterior surface, and the exterior threads of the nut are complementary to threads on a partition wall positioned between the transmitting unit and the probe. The hermetic seal and the nut include recesses, respectively. The method further includes coupling the probe with the hermetic seal, coupling the hermetic seal with the nut, and engaging a seal wrench with the hermetic seal. The method also includes engaging a socket wrench with the nut and rotating the nut via the socket wrench while holding the hermetic seal stationary via the seal wrench.

### DRAWINGS

FIG. 1A is a schematic diagram of an exemplary transmitter assembly.
FIG. 1B is a transmitter of the transmitter assembly shown in FIG. 1A.
FIG. 2 is a schematic diagram of the transmitter assembly shown in FIG. 1A installed between areas having different equipment protection levels (EPLs).
FIG. 3A is a cross-sectional view of an exemplary separation assembly of the transmitter assembly shown in FIG. 2, with the separation assembly being coupled to a partition wall.
FIG. 3B is an exploded view of the separation assembly shown in FIG. 3A.
FIG. 3C is a perspective view of an exemplary socket wrench for installing the separation assembly shown in FIG. 3A.
FIG. 3D is a perspective view of an exemplary seal wrench for installing the separation assembly shown in FIG. 3A.
FIG. 4 is a flow chart of an exemplary method of installing a separation assembly of a transmitter assembly shown in FIGs. 1-3D.
FIGs. 5A-5F are schematic diagrams illustrating the method shown in FIG. 4.

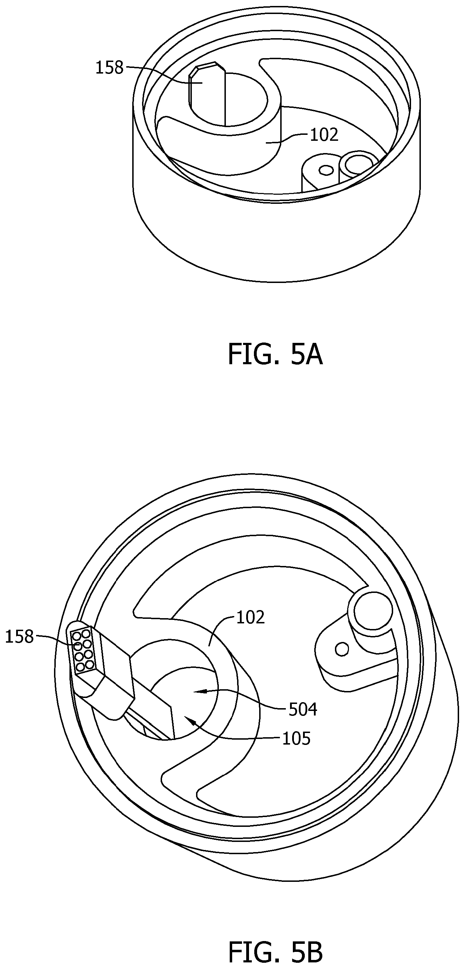

FIG. 5A shows connectors of a probe being retrieved in preparation for installing a separation assembly.
FIG. 5B shows the connectors after the connectors were retrieved.

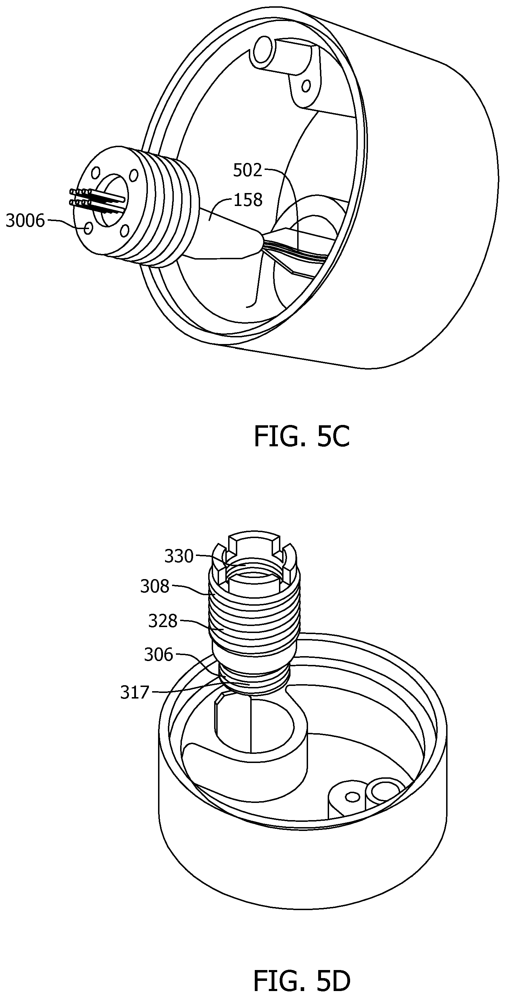

FIG. 5C shows a hermetic seal connected to the connectors.
FIG. 5D shows a nut coupled to the hermetic seal.

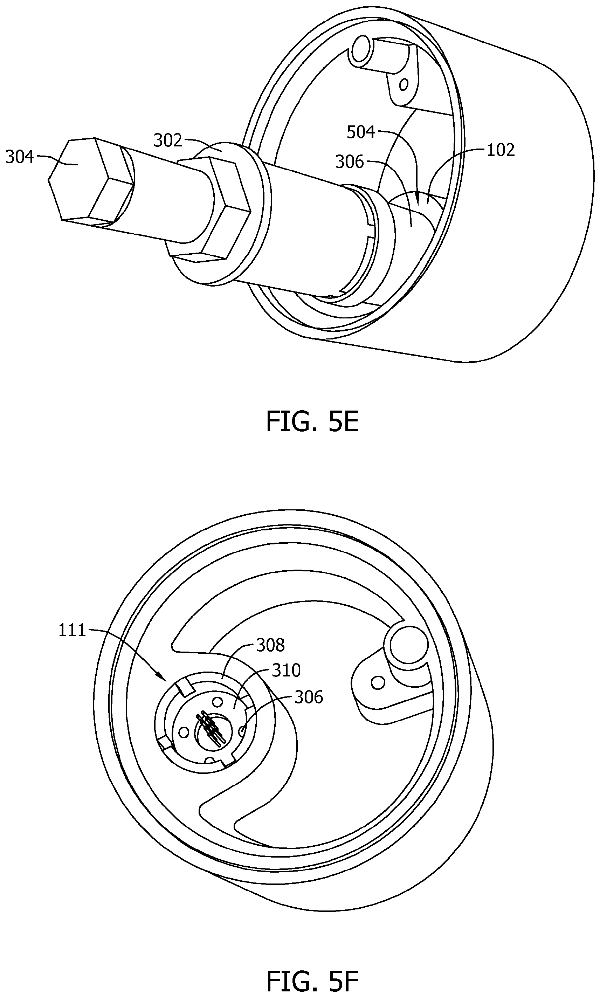

FIG. 5E shows a seal wrench engaged with the hermetic seal and a socket wrench is engaged with the nut.
FIG. 5F shows the separation assembly after the separation assembly has been installed.

### DETAILED DESCRIPTION

The disclosure includes assemblies and methods of transmitters between different equipment protection levels (EPLs) in a hazardous environment. A separation assembly located in a generally hazardous environment is used to limit energy entering from a less hazardous area into a more hazardous area , as well as providing electrical and mechanical connections between components of the transmitter in different EPLs.

In order to understand the inventive concepts described herein to their fullest extent, some discussion of the state of the art and certain problems concerning transmitters for a hazardous environment is set forth below, followed by exemplary embodiments of overcoming such problems in the art.

Various types of transmitters such as magnetostrictive level transmitters have been developed for numerous types of commercial and industrial environments. More specifically, magnetostrictive level transmitters have been developed for measuring a liquid level in an oil tank in hazardous environments, where the tank is designed to be explosion-protected.

A transmitter that operates within hazardous environments present a risk of explosion via ignition of a surrounding gas or vapor dusts, fibers, or flyings. Such hazardous environments may arise, for example only, in petroleum refineries, petrochemical plants, grain silos, wastewater, and/or treatment facilities among other industrial facilities, where volatile conditions are produced in the ambient environment and present a heightened risk of fire or explosion. An occasional or continuous presence of airborne ignitable gas, ignitable vapors or dust, or otherwise flammable substances presents substantial concerns regarding safe and reliable operation of such facilities overall, including, but not limited to, safe operation of the transmitter such as containing sparks within the transmitters to prevent possible fire or explosion. As such, a number of standards have been promulgated relating to electrical products used in explosive environments to improve safety in hazardous locations in view of an assessed probability of explosion or fire risk.

For example, Underwriter's Laboratories ("UL") standard UL 1203 sets forth Explosion-Proof and Dust-Ignition-Proof Electrical Equipment criteria for hazardous locations. Electrical equipment manufacturers may receive UL certification of compliance with the applicable rating standards for hazardous locations, and UL certification is an important aspect of a manufacturer's ability to successfully bring products to market in North America or any other market accepting UL standard 1203.

The National Electric Code (NEC) generally classifies hazardous locations by class and division. Class 1 locations are those in which flammable vapors and gases may be present. Class II locations are those in which combustible dust may be found. Class III locations are those which are hazardous because of the presence of easily ignitable fibers or flyings. Considering Class 1, Division 1 covers locations where flammable gases or vapors may exist under normal operating conditions or under frequent repair or maintenance operations, or where breakdown or faulty operation of process equipment might also cause simultaneous failure of electrical equipment. Division 1 presents a greater risk of explosion than, for example, Division 2 where flammable gases or vapors are normally handled either in a closed system, confined within suitable enclosures, or are normally prevented by positive mechanical ventilation.

The International Electrotechnical Commission (IEC) likewise categorizes hazardous locations into Class I, Zone 0, 1, or 2 representing locations in which flammable gases or vapors are or may be airborne in an amount sufficient to produce explosive or ignitable mixtures. As defined by the IEC, a Class I, Zone 0 location is a location in which ignitable concentrations of flammable gases or vapors are present continuously or for long periods of time. A Class I, Zone 1 location is a location in which ignitable concentrations of flammable gases or vapors are likely to exist because of repair or maintenance operations or because of leakage or possible release of ignitable concentrations of flammable gases or vapors, or is a location that is adjacent to a Class I, Zone 0 location from which ignitable concentrations of vapors could be communicated.

IEC 60079 specifies requirements for constructing, testing, and marking Ex (explosion protected) equipment, where different parts of the equipment are positioned in areas of different hazardousness levels and therefore have different equipment protection levels (EPLs). A separation assembly mounted across a boundary across different EPLs is required, such as between different gas hazardous areas, dust hazardous areas, or gas hazardous areas adjacent to dust hazardous areas. For example, for equipment installed in the wall of storage tanks located in Zone 1 and containing Zone 0 inside, a separation assembly is required to be installed between Zones 1 and 0.

Conventional explosion proof or flame proof transmitters between different EPLs are limited to rigid probes of certain form factors. That is, changes in form factors or materials of the probes would require complete design changes for the transmitters to be used between different EPLs in a hazardous environment.

The assemblies and methods disclosed herein accordingly provide transmitter assemblies and separation assemblies meeting the requirements for hazardous environments, as well as safe, reliable installation of the transmitter assemblies and separation assemblies. Further, the transmitter assemblies, separation assemblies, and installation methods disclosed herein are not limited to transmitter assemblies having rigid probes of certain form factor, but can be used for any transmitters, thereby reducing cost and labor in installation, upgrading, and maintenance.

A magnetostrictive level transmitter is described herein for illustration purposes only. The assemblies and methods described herein may be applied to any transmitters having a transmitter and installed between different EPLs in a hazardous environment. Method aspects will be in part apparent and in part explicitly discussed in the following description

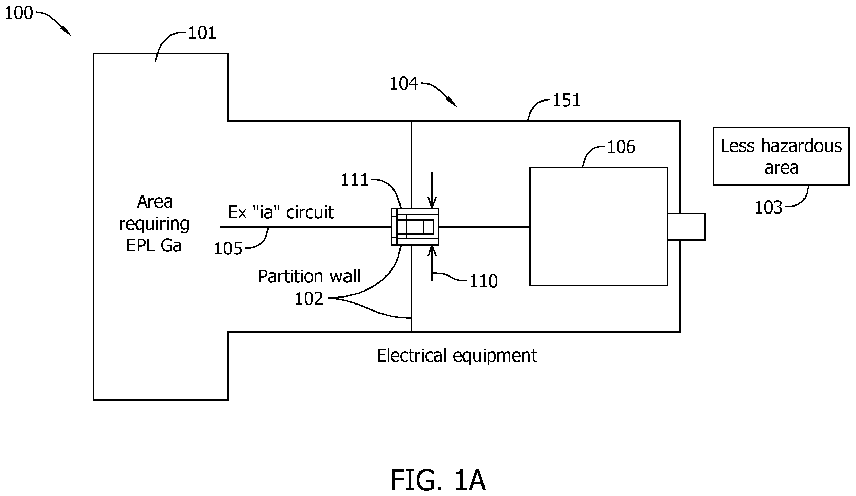

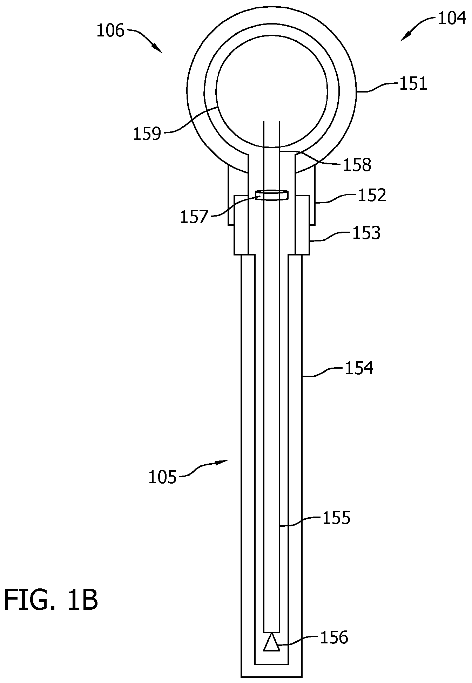

FIG. 1A is a block diagram of exemplary transmitter assembly 100 that is installed in areas having different EPLs. FIG. 1B is a schematic diagram of transmitter 104 of transmitter assembly 100.

In the exemplary embodiment, transmitter 104 is a magnetostrictive level transmitter (FIG. 1B). Transmitter 104 is used to measure physical parameters, such as liquid levels. Transmitter 104 includes probe 105 and transmitting unit 106. The signals from probe 105 are transmitted to the transmitting unit 106 for processing and transmission to a control system (not shown) and/or downstream devices. Transmitting unit 106 includes electronic board 159 that is configured to perform the functions of transmitting unit 106. Electronic board 159 is enclosed in enclosure 151. Enclosure 151 is attached to sensor adapter 153 through port 152 on enclosure 151. Sensor adapter 153 is attached to transmitter tube 154. Sensor adapter 153 and transmitter tube 154 conform with a body of probe 105 and form an enclosure that holds sensor wiring 155, sensor 157 such as a magnetostrictive sensor, and mechanical support 156. Signals detected by sensor 157 are transmitted to transmitting unit 106 through connectors 158.

In operation, magnetostrictive transmitter 104 is built by suspending the ferromagnetic metal wire or sensor wiring 155 inside long probe 105. Electronics in sensor 157 generate an electrical pulse that travels down the wire, at regular intervals, which creates a first magnetic field. A second magnetic field is created inside a float that moves up and down probe 105 with the liquid level and contains a magnet. When the electrical pulse reaches the float, the two magnetic fields collide, sensor wiring 155 inside probe 105 twists, and a vibration is propagated along the wire. The vibration is used to determining the liquid level because the vibration travels at a known speed, and therefore can be timed to measure the distance from sensor 157 to the float at the surface of the liquid, and back again. Signals representing liquid levels are transmitted to electronic board 159, which processes the signals and transmits out the signals using protocols such as Modbus communication protocols, 4-20 mA communication protocols where the signals are electrical current in the range of 4-20 mA, or digital communication protocols. Magnetostrictive level transmitters are relatively accurate and durable.

In the exemplary embodiment, transmitter assembly 100 and its installations comply with standards such as IEC 60079. Transmitter 104 of transmitter assembly 100 is installed in areas having different EPLs (FIG. 1A). For example, probe 105 of transmitter 104 is positioned in area 101 requiring EPL Ga while transmitting unit 106 of transmitter 104 is installed in less hazardous area 103 than area 101. Partition wall 102 limits the volume of enclosure 151 that houses transmitting unit 106 of transmitter 104. Partition wall 102 has a threaded opening that enable the electrical connection between transmitting unit 106 in enclosure 151 and probe 105. Transmitter assembly 100 includes separation assembly 111 installed between areas 101, 103 having different EPLs and coupled to partition wall 102. Separation assembly 111 keeps transmitter 104 explosion or flame proof using a hermetic seal and channels energy limited by transmitting unit 106 into probe 105 without compromising the explosion proof or flame proof characteristic of enclosure 151.

Meeting the safety requirements for hazardous environments by installing a separation assembly between areas having different EPLs is challenging for several reasons. Welding separation assembly 111 to partition wall 102 in the field is not an option in a hazardous environment due to fire and explosion risks. Welding in the factory presents other challenges such as transportation and refitting. Separation assembly 111 is instead threaded to partition wall 102. Access to the partition wall 102 from the more hazardous area 101 is typically not possible. The only access is from less hazardous area 103. Further, standards such as ISO 965-1 and ISO 965-3 require a minimum number of turns, e.g., 5 to 7 turns, of threads to securely and effectively couple the seal of separation assembly 111 with the partition wall. The seal, however, is connected to electrical connectors, which have wires and are used to carry electrical signals. Turning the seals by 5 to 7 turns will twist the wires or even damage the connections, which may cause sparks in more hazardous area 101, posing fire or explosion risks during operation.

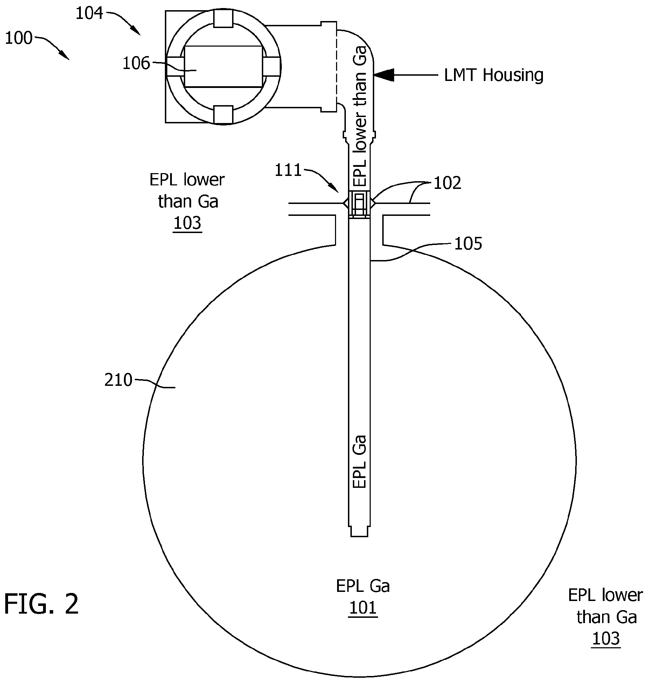

FIG. 2 shows exemplary transmitter assembly 100 and exemplary separation assembly 111 that overcome the above described problems. FIG. 2 is a schematic diagram of transmitter assembly 100 being installed in a hazardous environment having different EPLs. The depiction in FIG. 2 is not to scale.

In the exemplary embodiment, transmitter assembly 100 includes transmitter 104 and separation assembly 111. Transmitter 104 includes transmitting unit 106 and probe 105. Transmitter 104 may be a magnetostrictive level transmitter that is used to measure liquid levels in oil tank 210. Transmitter 104 is installed on the oil tank 210 such that the probe 105 is inside the oil tank 210, a more hazardous area 101, while transmitting unit 106 is positioned in area 103 that is less hazardous than oil tank 210. Outside area 103 may still be in a hazardous environment such as petroleum refineries and petrochemical plants, but has a lower EPL than area 101. For example, oil tank 210 has an EPL Ga, which is for equipment in explosive atmospheres due to presence of gas, with a level of protection very high, while outside area 103 has an EPL Gb, which is for equipment for use in explosive atmospheres due to the presence of gas, with a high level of protection.

To meet the requirements for a hazardous environment having different EPLs, partition wall 102 is required at the border between outside area 103 and oil tank 210, as well as around probe 105. The probe part of this requirement may be met if the probe is rigid, where the probe itself is a partition wall. A new rigid probe with a form factor different from probes already certified could not be used in a hazardous area until the new rigid probe is evaluated and certified by a certification body. Further, probes 105 typically are relatively long, for example, having a length of 25 m (75 feet). Transporting a rigid probe of such a length is inconvenient. Probes 105 therefore are flexible such that probes 105 may be rolled up during transportation to installation sites and be rolled out during installation. In some embodiments, flexible probe 105 includes a housing fabricated from thermoplastic or other flexible membranes. Flexible probes 105, however, do not meet the partition wall requirement. Including separation assembly 111 in transmitter assembly 100 provides flexibilities in having probes of various form factors or having rigid or flexible housing.

To meet the requirements and accommodate flexible probes 105, separation assembly 111 is used. Separation assembly 111 facilitates electrical and mechanic connections between transmitting unit 106 and probe 105 and serves to seal transmitting unit 106 from more hazardous area 210 such that energy that passes through separation assembly 111 is limited to the level allowed by more hazardous area 101, such as at EPL Ga.

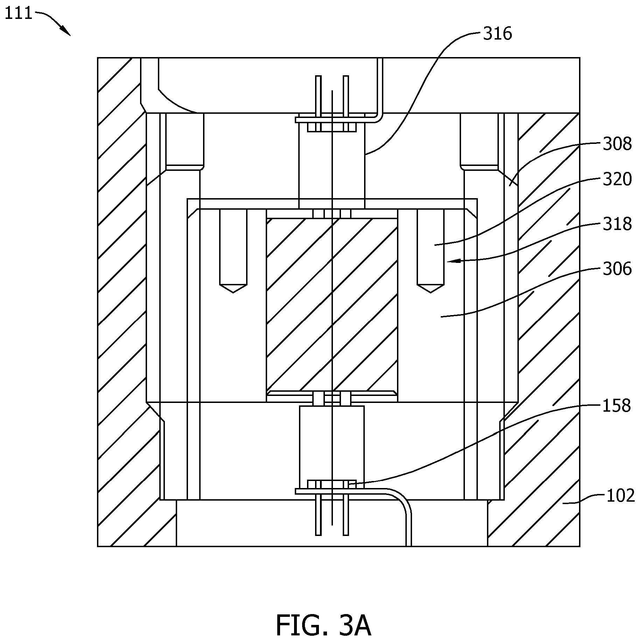

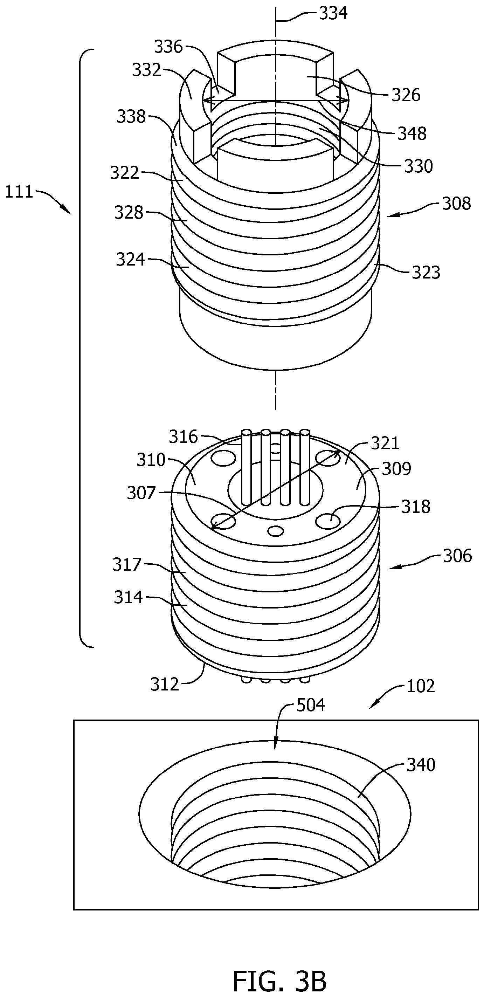

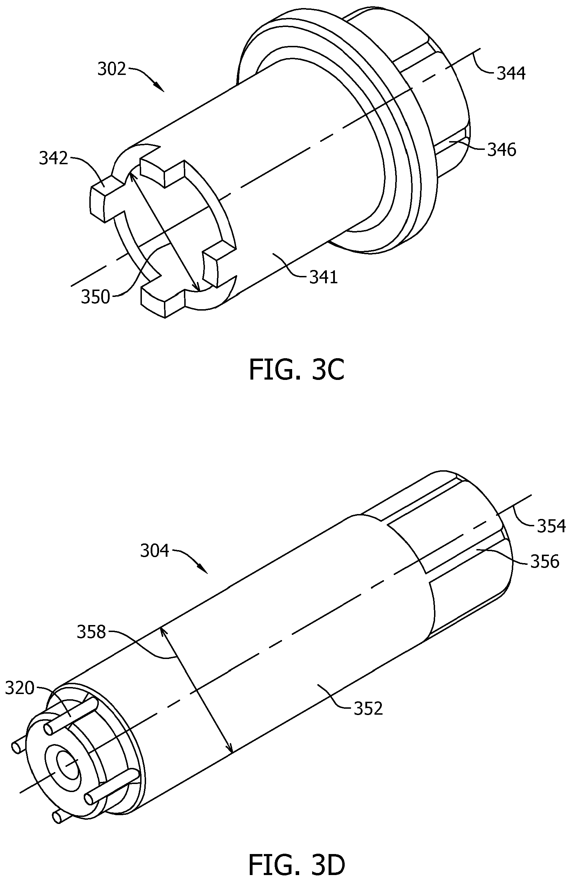

FIGs. 3A-3D show exemplary separation assembly 111. FIG. 3A is a cross-sectional view of separation assembly 111 as assembled with partition wall 102. FIG. 3B is an exploded view of separation assembly 111. FIG. 3C is a perspective view of socket wrench 302. FIG. 3D is a perspective view of seal wrench 304. Socket wrench 302 and seal wrench 304 are used to facilitate installation of separation assembly 111.

In the exemplary embodiment, separation assembly 111 includes hermetic seal 306 and nut 308 (FIG. 3B). Hermetic seal 306 has a generally cylindrical seal body 309. Hermetic seal 306 may have a diameter 307 of 12 mm-13 mm. Hermetic seal 306 includes top surface 310, bottom surface 312 opposite top surface 310, and side surface 314 extending between top surface 310 and bottom surface 312. Bottom surface 312 includes connectors (not shown) sized to couple with connectors 158 from probe 105 (see FIG. 1B and FIGs. 5A-5C described later). Exterior threads 317 are formed along side surface 314. Top surface 310 includes connectors 316 that provide electrical and mechanical connection with transmitting unit 106. In the depicted embodiment, connectors 316 are pins. Alternatively, the connectors may be sockets for receiving connectors from the transmitting unit 106. Top surface 310 further includes a plurality of recesses 318 each sized to receive and engage with pins 320 of seal wrench 304 (FIGs. 3A and 3D). The recesses 318 may have a diameter of 1.2 mm. An increased number of recesses 318 provides increased coupling force between seal wrench 304 and hermetic seal 306. Recesses 318 may be evenly distributed along rim 321 on top surface 310.

In the exemplary embodiment, nut 308 includes cylindrical wall 322 that defines a hollow cylinder or tunnel 323 sized to telescopingly receive hermetic seal 306 therein (FIG. 3B). Cylindrical wall 322 includes exterior surface 324 and interior surface 326 opposite exterior surface 324. Cylindrical wall 322 includes exterior threads 328 along exterior surface 324 and interior threads 330 along interior surface 326. Interior threads 330 are complementary to exterior threads 317 of hermetic seal 306. That is, pitches and slopes of threads 317, 330 are approximately the same such that when hermetic seal 306 and nut 308 are rotated separately or are both rotated, hermetic seal 306 can be coupled with, or decoupled from the nut 308 as the seal and nut threads 317, 330 engage with or disengage from one another, and as a result hermetic seal 306 moves toward or away from the nut. The sloping directions of exterior threads 328 and interior threads 330 of nut 308, however, are opposite from one another and as a result the hermetic seal 306 may remain stationary while nut 308 is being rotated. Cylindrical wall 322 further includes a plurality of projections 332 extending parallel to longitudinal axis 334 of the cylindrical wall 322. Each pair of adjacent projections 332 define a like recess 336 therebetween. The projections 332 may be evenly distributed along rim 338. Exterior threads 328 of nut 308 are complementary to threads 340 of partition wall 102.

In the exemplary embodiment, socket wrench 302 is formed as a generally hollow cylinder 341 and open at both ends. The socket wrench 302 includes a plurality of feet 342 each sized to be received in one of recesses 336 of cylindrical wall 322 of nut 308 and engage projections 332. Feet 342 extend from one end of socket wrench 302 parallel to longitudinal axis 344. Feet 342 may be evenly distributed along the edge of cylindrical wall 322. As a result, the force applied by socket wrench 302 on nut 308 through the engagement between feet 342 and projections 332 is balanced. At the end of socket wrench 302 opposite the end that includes feet 342, a series of grooves 346 are provided. The grooves 346 increase the user's ability to grip the socket wrench 302. Diameter 350 of hollow cylinder 341 formed by socket wrench 302 is approximately the same as diameter 348 of hollow cylinder 323 of nut 308 such that socket wrench 302 can be fitted onto nut 308 with feet 342 of socket wrench 302 located in nut recesses 336.

In the exemplary embodiment, seal wrench 304 includes the plurality of pins 320 positioned at one end of seal wrench 304 and sized to be received in recesses 318 on top surface 310 of hermetic seal 306 and thereby engage with hermetic seal 306. Seal wrench 304 comprises a generally cylindrical body 352. Body 352 may be hollow or solid, or have other interior structures. Pins 320 extend from one end of the seal wrench parallel to longitudinal axis 354 of body 352. The pins may be evenly distributed along an edge of the body 352. As a result, the force applied on hermetic seal 306 through the engagement of pins 320 in recesses 318 is balanced. At the end of body 352, opposite the body end that includes pins 320, seal wrench 304 may further include grooves 356 that enable the wrench user to increase the user's grip applied to the seal wrench. Diameter 358 of body 352 is approximately the same as diameter 307 of cylinder or cylindrical seal body 309 of hermetic seal 306 such that seal wrench 304 can be fitted onto hermetic seal 306 with pins 320 engaged in recesses 318 of hermetic seal 306. Socket wrench 302 is sized to permit the end of seal wrench 304 to be located within the interior of socket wrench 302 along axis 344.

In operation, once assembled, nut 308 is coupled to the partition wall 102 by coupling of exterior threads 328 of nut 308 with threads 340 of partition wall 102. Hermetic seal 306 is positioned inside nut 308 with interior threads 330 of nut 308 coupled and engaged with threads 317 of hermetic seal 306. The coupling and engagement of threads 317, 328, 330, and 340 are facilitated by seal wrench 304 and socket wrench 302, where socket wrench 302 rotates nut 308 while hermetic seal 306 is held stationary by seal wrench 304 during rotation of the nut 308.

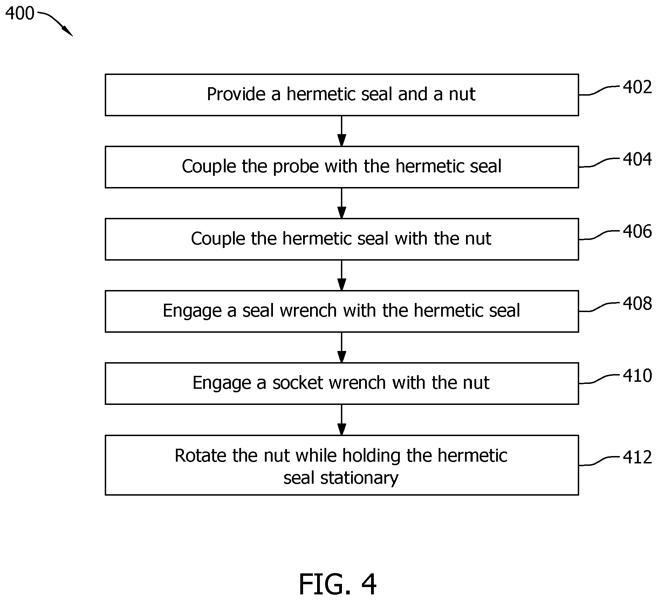

FIGs. 4-5F depict exemplary method 400 of installing the separate assembly of a transmitter assembly between different EPLs in a hazardous environment. FIG. 4 is a flow chart of method 400. FIGs. 5A-5F are schematic diagrams illustrating method 400.

In the exemplary embodiment, method 400 includes providing 402 a hermetic seal and a nut. The hermetic seal and the nut may be hermetic seal 306 and nut 308 described above, respectively. Method 400 includes coupling 404 the probe of the transmitter assembly with the hermetic seal. First, connectors 158 from probe 105 are retrieved (FIG. 5A) from the opening provided in partition wall 102. FIG. 5B shows the connectors 158 have been retrieved. Connectors 158 are then connected to hermetic seal 306 (FIG. 5C). Method 400 further includes coupling 406 the hermetic seal with the nut. Nut 308 is placed over the hermetic seal and is rotated with a few turns, e.g., one turn, such that nut 308 engages with the hermetic seal through nut interior threads 330 and hermetic seal exterior threads 317. During the rotation, hermetic seal 306 is held stationary to avoid the twisting of the connectors 158 and their associated wires 502 (FIG. 5C). Therefore, rotating one turn is desired such that only one pair of threads of threads 317, 330 are engaged with one another.

In the exemplary embodiment, method 400 further includes engaging 408 a seal wrench with the hermetic seal. Method 400 also includes engaging 410 a socket wrench with the nut. That is, seal wrench 304 is placed over and engages with hermetic seal 306, and socket wrench 302 is placed over and engages with nut 308 (FIG. 5D). Socket wrench 302 is slid along body 352 of seal wrench 304 until feet 342 are located in recesses 336 (see FIGs. 3A-3D). Alternatively, socket wrench 302 is placed over nut 308 first and then seal wrench 304 is inserted into body or hollow cylinder 341 of socket wrench 302 until pins 320 are received in recesses 318. Hermetic seal 306 and nut 308 are moved as a single unit into opening 504 of partition wall 102 (FIG. 5D, also see FIGs. 3B and 5B), with socket wrench 302 and seal wrench 304 engaged with nut 308 and hermetic seal 306, respectively. Method 400 also includes rotating 412 the nut while holding the hermetic seal stationary. With seal wrench 304 maintaining the hermetic seal stationary, socket wrench 302 is rotated about axis 344 until top exterior threads 328 of nut 308 are engaged with top threads 340 of partition wall 102 (FIG. 5E, also see FIGs. 3B and 5B). In some embodiments, after rotation is completed, only an end of nut 308 and top surface 310 of hermetic seal 306 are visible outside the partition wall 102. During the entire installation, the wires 502 of the connectors 158 are not twisted. As a result, separation assembly 111 is safely and reliably installed.

At least one technical effect of the systems and methods described herein includes (a) a separation assembly configured to threadedly couple with a partition wall between different EPLs in a hazardous environment; (b) a nut having interior threads and exterior threads of opposite sloping directions to facilitate installation of a hermetic seal without the hermetic seal being rotated while connected with wires; (c) a socket wrench and a seal wrench for facilitating installation of a hermetic seal; and (d) an installation method of coupling a hermetic seal to a threaded partition wall without the hermetic seal being rotated.

Exemplary embodiments of assemblies and methods of transmitters are described above in detail. The assemblies and methods are not limited to the specific embodiments described herein but, rather, components of the systems and/or operations of the methods may be utilized independently and separately from other components and/or operations described herein. Further, the described components and/or operations may also be defined in, or used in combination with, other systems, methods, and/or devices, and are not limited to practice with only the systems described herein.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A method of installing a separation assembly (111) of a transmitter assembly (100) between different equipment protection levels in a hazardous environment, the method comprising:
providing a hermetic seal (306) and a nut (308), wherein the hermetic seal (306) is configured to be electrically connected to a transmitting unit (106) and a probe (105) of the transmitter assembly (100), and the nut (308) defines a tunnel sized to receive the hermetic seal (306) therein, wherein the nut (308) has an exterior surface and exterior threads (328) formed on the exterior surface, and the exterior threads (328) of the nut (308) are complementary to threads (340) on a partition wall (102) positioned between the transmitting unit (106) and the probe (105), and wherein the hermetic seal and the nut (308) include recesses (318; 336), respectively;
coupling the probe (105) with the hermetic seal (306);
coupling the hermetic seal (306) with the nut (308);
engaging a seal wrench (304) with the hermetic seal (306);
engaging a socket wrench (302) with the nut (308); and
rotating the nut (308) via the socket wrench (302) while holding the hermetic seal (306) stationary via the seal wrench (304).

2. The method of claim 1, wherein the nut (308) has an interior surface opposite the exterior surface and interior threads formed on the interior surface, the exterior threads (328) and the interior threads sloping in opposite directions.

3. The method of claim 2, wherein the hermetic seal (306) further includes exterior threads formed on a side surface of the hermetic seal (306) and complementary to the interior threads of the nut (308).

4. The method of claim 3, wherein coupling the hermetic seal (306) further comprises coupling the hermetic seal (306) with the nut (308) by one turn of the interior threads of the nut (308).

5. The method of claim 1, wherein engaging a seal wrench (304) further comprises engaging pins (320) of the seal wrench (304) in the recesses of the hermetic seal (306), and engaging a socket wrench (302) further comprises engaging feet of the socket wrench (302) in the recesses of the nut (308).

6. A separation assembly (111) of a transmitter assembly (100) for a hazardous environment comprising:
a hermetic seal (306) configured to be electrically connected to a transmitting unit (106) and a probe (105) of the transmitter assembly (100); and
a nut (308) defining a tunnel sized to receive the hermetic seal (306) therein, wherein the nut (308) has an exterior surface and exterior threads (328) formed on the exterior surface,
wherein the exterior threads (328) of the nut (308) are complementary to threads (340) on a partition wall (102) positioned between the transmitting unit (106) and the probe (105), wherein the nut (308) has an interior surface opposite the exterior surface and interior threads formed on the interior surface, the exterior threads (328) and the interior threads sloping in opposite directions, and wherein the hermetic seal (306) and the nut (308) include a plurality of recesses (318; 336), respectively.

7. The separation assembly of claim 6, wherein the hermetic seal (306) further comprises exterior threads formed on a side surface of the hermetic seal (306) and complementary to the interior threads of the nut (308).

8. The separation assembly of claim 6, further comprising a seal wrench (304) and a socket wrench (302), wherein the socket wrench (302) is configured to engage with the nut (308) and rotate the nut (308), and the seal wrench (304) is configured to engage with the hermetic seal (306) and hold the hermetic seal (306) stationary while the nut (308) is being rotated.

9. The separation assembly of claim 8, wherein the hermetic seal (306) includes a top surface, and the top surface defines the plurality of recesses.

10. The separation assembly of claim 9, wherein the seal wrench (304) includes a plurality of pins (320) sized to be received in the recesses.

11. The separation assembly of claim 8, wherein the nut (308) further comprises a plurality of projections, the plurality of projections define the plurality of recesses, and the socket wrench (302) includes a plurality of feet sized to be received in the plurality of recesses of the nut (308).

12. A transmitter assembly (100) for a hazardous environment, comprising:
a transmitter comprising:
a transmitting unit (106) configured to be positioned in a first area of the hazardous environment; and
a probe (105) coupled with the transmitting unit (106) and configured to be positioned in a second area of the hazardous environment, wherein the second area is more hazardous and has a higher equipment protection level than the first area; and
a separation assembly (111) of claim 6, the separation assembly (111) positioned between the transmitting unit (106) and the probe. (105)

13. The transmitter assembly of claim 12, wherein the probe (105) includes a thermoplastic membrane.

14. The separation assembly of claim 8, wherein the socket wrench (302) is formed as a hollow cylinder and open at both ends, and wherein the socket wrench (302) is sized to permit an end of seal wrench (304) to be located within an interior of socket wrench (302) along an axis (344).

## Patentansprüche

1. Verfahren zum Installieren einer Trennbaugruppe (111) einer Senderbaugruppe (100) zwischen verschiedenen Geräteschutzklassen in einer gefährlichen Umgebung, wobei das Verfahren Folgendes umfasst:
Bereitstellen einer hermetischen Dichtung (306) und einer Mutter (308), wobei die hermetische Dichtung (306) zur elektrischen Verbindung mit einer Sendereinheit (106) und einer Sonde (105) der Senderbaugruppe (100) ausgestaltet ist, und die Mutter (308) einen Tunnel definiert, der zur Aufnahme der hermetischen Dichtung (306) darin bemessen ist, wobei die Mutter (308) eine Außenfläche und ein an der Außenfläche ausgebildetes Außengewinde (328) aufweist und das Außengewinde (328) der Mutter (308) zu einem Gewinde (340) an einer zwischen der Sendereinheit (106) und der Sonde (105) positionierten Trennwand (102) komplementär ist, und wobei die hermetische Dichtung und die Mutter (308) jeweils Aussparungen (318; 336) aufweisen,
Koppeln der Sonde (105) mit der hermetischen Dichtung (306),
Verbinden der hermetischen Dichtung (306) mit der Mutter (308),
Ineingriffbringen eines Dichtungsschlüssels (304) mit der hermetischen Dichtung (306),
Ineingriffbringen eines Steckschlüssels (302) mit der Mutter (308); und
Drehen der Mutter (308) über den Steckschlüssel (302), während die hermetische Dichtung (306) über den Dichtungsschlüssel (304) stationär gehalten wird.

2. Verfahren nach Anspruch 1, wobei die Mutter (308) eine Innenfläche gegenüber der Außenfläche und ein an der Innenfläche ausgebildetes Innengewinde aufweist, wobei das Außengewinde (328) und das Innengewinde in entgegengesetzte Richtungen geneigt sind.

3. Verfahren nach Anspruch 2, wobei die hermetische Dichtung (306) ferner ein Außengewinde aufweist, das an einer Seitenfläche der hermetischen Dichtung (306) ausgebildet und zu dem Innengewinden der Mutter (308) komplementär ist.

4. Verfahren nach Anspruch 3, wobei das Koppeln der hermetischen Dichtung (306) ferner das Koppeln der hermetischen Dichtung (306) mit der Mutter (308) um eine Umdrehung des Innengewindes der Mutter (308) umfasst.

5. Verfahren nach Anspruch 1, wobei das Ineingriffbringen eines Dichtungsschlüssels (304) ferner das Ineingriffbringen von Stiften (320) des Dichtungsschlüssels (304) in den Aussparungen der hermetischen Dichtung (306) umfasst und das Ineingriffbringen eines Steckschlüssels (302) ferner das Ineingriffbringen von Füßen des Steckschlüssels (302) in den Aussparungen der Mutter (308) umfasst.

6. Trennbaugruppe (111) einer Senderbaugruppe (100) für eine gefährliche Umgebung, umfassend:
eine hermetische Dichtung (306), die zur elektrischen Verbindung mit einer Sendereinheit (106) und einer Sonde (105) der Senderbaugruppe (100) ausgestaltet ist, und
eine Mutter (308), die einen Tunnel definiert, der zur Aufnahme der hermetischen Dichtung (306) darin bemessen ist, wobei die Mutter (308) eine Außenfläche und ein an der Außenfläche ausgebildetes Außengewinde (328) aufweist,
wobei das Außengewinde (328) der Mutter (308) zu einem Gewinde (340) an einer zwischen der Sendereinheit (106) und der Sonde (105) positionierten Trennwand (102) komplementär ist, wobei die Mutter (308) eine Innenfläche gegenüber der Außenfläche und ein an der Innenfläche ausgebildetes Innengewinde aufweist, wobei das Außengewinde (328) und das Innengewinde in entgegengesetzte Richtungen geneigt sind, und wobei die hermetische Dichtung (306) bzw. die Mutter (308) eine Vielzahl von Aussparungen (318; 336) aufweisen.

7. Trennbaugruppe nach Anspruch 6, wobei die hermetische Dichtung (306) ferner ein Außengewinde aufweist, das an einer Seitenfläche der hermetischen Dichtung (306) ausgebildet und zu dem Innengewinden der Mutter (308) komplementär ist.

8. Trennbaugruppe nach Anspruch 6, ferner umfassend einen Dichtungsschlüssel (304) und einen Steckschlüssel (302), wobei der Steckschlüssel (302) dazu ausgestaltet ist, mit der Mutter (308) in Eingriff zu kommen und die Mutter (308) zu drehen, und der Dichtungsschlüssel (304) dazu ausgestaltet ist, mit der hermetischen Dichtung (306) in Eingriff zu kommen und die hermetische Dichtung (306) stationär zu halten, während die Mutter (308) gedreht wird.

9. Trennbaugruppe nach Anspruch 8, wobei die hermetische Dichtung (306) eine obere Fläche aufweist und die obere Fläche die Vielzahl von Aussparungen definiert.

10. Trennbaugruppe nach Anspruch 9, wobei der Dichtungsschlüssel (304) eine Vielzahl von Stiften (320) aufweist, die zur Aufnahme in den Aussparungen bemessen sind.

11. Trennbaugruppe nach Anspruch 8, wobei die Mutter (308) ferner eine Vielzahl von Vorsprüngen umfasst, die Vielzahl von Vorsprüngen die Vielzahl von Aussparungen definieren und der Steckschlüssel (302) eine zur Aufnahme in der Vielzahl von Aussparungen der Mutter (308) bemessene Vielzahl von Füßen umfasst.

12. Senderbaugruppe (100) für eine gefährliche Umgebung, umfassend:
einen Sender, der Folgendes umfasst:
eine Sendereinheit (106), die dazu ausgestaltet ist, in einem ersten Bereich der gefährlichen Umgebung positioniert zu werden, und
eine Sonde (105), die mit der Sendereinheit (106) gekoppelt und dazu ausgestaltet ist, in einem zweiten Bereich der gefährlichen Umgebung positioniert zu werden, wobei der zweite Bereich gefährlicher als der erste Bereich ist und eine höhere Geräteschutzklasse als dieser aufweist, und
eine Trennbaugruppe (111) nach Anspruch 6, wobei die Trennbaugruppe (111) zwischen der Sendereinheit (106) und der Sonde (105) positioniert ist.

13. Senderbaugruppe nach Anspruch 12, wobei die Sonde (105) eine thermoplastische Membran aufweist.

14. Trennbaugruppe nach Anspruch 8, wobei der Steckschlüssel (302) als ein hohler Zylinder ausgebildet und an beiden Enden offen ist, und wobei der Steckschlüssel (302) so bemessen ist, dass ein Ende des Dichtungsschlüssels (304) in einem Inneren des Steckschlüssels (302) entlang einer Achse (344) angeordnet werden kann.

## Revendications

1. Procédé d'installation d'un ensemble de séparation (111) d'un ensemble à transmetteur-récepteur (100) entre différents niveaux de protection d'équipement dans un environnement dangereux, le procédé comprenant :
la fourniture d'un joint hermétique (306) et d'un écrou (308), dans lequel le joint hermétique (306) est configuré pour être connecté électriquement à une unité de transmission (106) et à une sonde (105) de l'ensemble à transmetteur-récepteur (100), et l'écrou (308) définit un tunnel dimensionné pour recevoir le joint hermétique (306) dans celui-ci, dans lequel l'écrou (308) a une surface extérieure et des filets extérieurs (328) formés sur la surface extérieure, et les filets extérieurs (328) de l'écrou (308) sont complémentaires à des filets (340) sur une paroi de séparation (102) positionnée entre l'unité de transmission (106) et la sonde (105), et dans lequel le joint hermétique et l'écrou (308) incluent des évidements (318 ; 336), respectivement ;
le couplage de la sonde (105) au joint hermétique (306) ; le couplage du joint hermétique (306) à l'écrou (308) ;
la mise en prise d'une clef de joint (304) avec le joint hermétique (306) ;
la mise en prise d'une clef à douille (302) avec l'écrou (308) ; et
la mise en rotation de l'écrou (308) par l'intermédiaire de la clef à douille (302) tout en maintenant le joint hermétique (306) stationnaire par l'intermédiaire de la clef de joint (304).

2. Procédé de la revendication 1, dans lequel l'écrou (308) a une surface intérieure opposée à la surface extérieure et des filets intérieurs formés sur la surface intérieure, les filets extérieurs (328) et les filets intérieurs penchant dans des directions opposées.

3. Procédé de la revendication 2, dans lequel le joint hermétique (306) inclut en outre des filets extérieurs formés sur une surface latérale du joint hermétique (306) et complémentaires aux filets intérieurs de l'écrou (308).

4. Procédé de la revendication 3, dans lequel le couplage du joint hermétique (306) comprend en outre le couplage du joint hermétique (306) à l'écrou (308) par un tour des filets intérieurs de l'écrou (308).

5. Procédé de la revendication 1, dans lequel la mise en prise d'une clef de joint (304) comprend en outre l'engagement de broches (320) de la clef de joint (304) dans les évidements du joint hermétique (306), et la mise en prise d'une clef à douille (302) comprend en outre l'engagement de pieds de la clef à douille (302) dans les évidements de l'écrou (308).

6. Ensemble de séparation (111) d'un ensemble à transmetteur-récepteur (100) pour un environnement dangereux comprenant :
un joint hermétique (306) configuré pour être connecté électriquement à une unité de transmission (106) et à une sonde (105) de l'ensemble à transmetteur-récepteur (100) ; et
un écrou (308) définissant un tunnel dimensionné pour recevoir le joint hermétique (306) dans celui-ci, dans lequel l'écrou (308) a une surface extérieure et des filets extérieurs (328) formés sur la surface extérieure, dans lequel les filets extérieurs (328) de l'écrou (308) sont complémentaires à des filets (340) sur une paroi de séparation (102) positionnée entre l'unité de transmission (106) et la sonde (105), dans lequel l'écrou (308) a une surface intérieure opposée à la surface extérieure et des filets intérieurs formés sur la surface intérieure, les filets extérieurs (328) et les filets intérieurs penchant dans des directions opposées, et dans lequel le joint hermétique (306) et l'écrou (308) incluent une pluralité d'évidements (318 ; 336), respectivement.

7. Ensemble de séparation de la revendication 6, dans lequel le joint hermétique (306) comprend en outre des filets extérieurs formés sur une surface latérale du joint hermétique (306) et complémentaires aux filets intérieurs de l'écrou (308).

8. Ensemble de séparation de la revendication 6, comprenant en outre une clef de joint (304) et une clef à douille (302), dans lequel la clef à douille (302) est configurée pour entrer en prise avec l'écrou (308) et mettre en rotation l'écrou (308), et la clef de joint (304) est configurée pour entrer en prise avec le joint hermétique (306) et maintenir le joint hermétique (306) stationnaire alors que l'écrou (308) est mis en rotation.

9. Ensemble de séparation de la revendication 8, dans lequel le joint hermétique (306) inclut une surface supérieure, et la surface supérieure définit la pluralité d'évidements.

10. Ensemble de séparation de la revendication 9, dans lequel la clef de joint (304) inclut une pluralité de broches (320) dimensionnées pour être reçues dans les évidements.

11. Ensemble de séparation de la revendication 8, dans lequel l'écrou (308) comprend en outre une pluralité de saillies, la pluralité de saillies définissent la pluralité d'évidements, et la clef à douille (302) inclut une pluralité de pieds dimensionnés pour être reçus dans la pluralité d'évidements de l'écrou (308).

12. Ensemble à transmetteur-récepteur (100) pour un environnement dangereux, comprenant :
un transmetteur-récepteur comprenant :
une unité de transmission (106) configurée pour être positionnée dans une première zone de l'environnement dangereux ; et
une sonde (105) couplée à l'unité de transmission (106) et configurée pour être positionnée dans une seconde zone de l'environnement dangereux, dans lequel la seconde zone est plus dangereuse et a un niveau de protection d'équipement plus élevé que celui de la première zone ; et
un ensemble de séparation (111) de la revendication 6, l'ensemble de séparation (111) étant positionné entre l'unité de transmission (106) et la sonde (105).

13. Ensemble à transmetteur-récepteur de la revendication 12, dans lequel la sonde (105) inclut une membrane thermoplastique.

14. Ensemble de séparation de la revendication 8, dans lequel la clef à douille (302) est sous la forme d'un cylindre creux et est ouverte aux deux extrémité, et dans lequel la clef à douille (302) est dimensionnée pour permettre à une extrémité de la clef de joint (304) d'être positionnée à l'intérieur de la clef à douille (302) le long d'un axe (344).
